# EUROPEAN PATENT SPECIFICATION

(11) **EP 1 089 014 B1**
(45) Date of publication and mention of the grant of the patent: **10.11.2004**
(21) Application number: 00308503.2
(22) Date of filing: 28.09.2000
(51) Int. Cl.: F16G 11/12, F16P 3/12, H01H 3/02

(54) **Rope operated switch assembly and its installing method**
Seilbetätigte Schalteinrichtung und deren Bereitstellung
Ensemble interrupteur à commande par cable et son procédé d'installation

(30) Priority: 30.09.1999 GB 9923019; 20.03.2000 GB 0006617
(43) Date of publication of application: 04.04.2001
(73) Proprietor: Eja Limited, Hindley Green Industrial Estate, Wigan WN2 4HR (GB)
(72) Inventor: Mohtasham, Mehdi, Astley, Manchester, M29 4EP (GB); Kerr, David, Aughton, Lancashire, L39 2QG (GB); Holt, David, Tyldesley, Manchester, M20 8JL (GB)
(74) Representative: Cardwell, Stuart Martin

(56) References cited:
- BE-A- 555 340
- CH-A- 324 480
- FR-A- 1 525 342
- GB-A- 1 047 211

## Description

The present invention relates to a rope tensioner which may be used to tension a rope operated switch assembly. Such an assembly may be used, particularly but not exclusively for controlling the power supply to kinetic machinery.

Rope operated switch assemblies are generally fitted in proximity to a machine or around any area which requires protection, and comprise two safety switches and a rope extending between the switches such that the electrical power supply may be turned off when the rope is pulled or slackened (e.g. if the rope is cut). In some applications, only one switch is provided, the end of the rope being connected to the single switch and the other end being connected to for example a spring secured to a fixed point. The rope is generally a plastics-coated metal wire or cable, and extends around the machine so that an operator can easily reach it from any position adjacent the machine. The term "rope" used hereinafter is intended to mean any elongate flexible element that is suitable for using in a rope operated switch assembly, for example, metal cable, cord formed of twisted elements or fibres such as wire, polymeric material, etc., which may optionally be coated with a plastics material.

The rope must be installed at the correct tension so that the machinery can be operated but so that a relatively small change in the tension of the rope will actuate the switch assembly. This is important because an injured operator may not be able to pull the rope with much force.

The installation of the rope at the correct tension is difficult to achieve. The rope must first be installed between the two switches, and is then pulled into an approximation of the correct tension. A turnbuckle is installed in the centre of the rope by cutting the rope and fixing the turnbuckle between the rope sections using thimbles and cable clamps. Once installed, the tension in the rope is set by adjusting eye bolts on the turnbuckle until the rope switches are pulled into a "run" position, that is, with safety contacts in the switches made. The turnbuckle then allows small alterations to be made to the tension of the rope to allow for expansion or contraction of the rope due to, for example, temperature differences.

Placement of the turnbuckle in the rope is a time-consuming and often difficult process, and can take up a large proportion of the total time taken to install the rope switch assembly. The setting of the correct tension in the rope is particularly difficult, as the switches must be continually checked to ensure that the switch mechanisms are in the correct position in order that the rope is not set at an incorrect tension. As the turnbuckle ideally is placed towards the centre of the rope to allow for even tensioning, the turnbuckle may be some distance from the switches.

In addition, the turnbuckle only allows small differences in tension in the rope to be corrected for. If the tension alters by more than can be dealt with using the turnbuckle, the slack or expansion must be dealt with by movement of the thimbles and cable clamps along the rope segments. A large alteration in tension can occur, for example, due to large temperature fluctuations in different seasons, especially on long runs of rope.

FR-A-1,525,342 describes a cam operated safety switch which is operated from a distance by pulling on a cable attached to the switch operating mechanism. Tension in the cable is balanced by counterweights. It is an object of the present invention to obviate or mitigate such disadvantages with prior art systems.

According to a first aspect of the present invention there is provided a rope operated switch assembly comprising a rope extending to at least one switch, the switch being actuable to switch between first and second conditions on a change in tension of the rope, and a tensioner for setting the tension of the rope, wherein the tensioner comprises a body, a rotatable member which engages the rope, means for rotating the member relative to the body to adjust tension in the rope by winding the rope around the member, and locking means to lock the member in position relative to the body.

The tensioner may be simply threaded or otherwise installed onto the rope during installation of the rope operated switch assembly, without the need to cut the rope. The installation is thus much simpler than with prior art switch assemblies.

The locking means preferably comprises a ratchet and pawl. Preferably, means displaceable relative to the body are provided to move the pawl out of engagement with the ratchet, thereby unlocking the shaft to release the tension in the rope. The displaceable means may comprise a screw that may be screwed into the body.

A plate is preferably provided to separate the tensioner into two compartments, the rope extending into one compartment, and the locking means being provided in the other compartment. This means that the rope does not become entangled in the locking means whilst the tensioner is being installed along the rope.

The tensioner is preferably provided adjacent the switch, meaning that the installation may be effected quickly as the operator can easily check the state of the adjacent switch as the tension in the rope is altered.

According the a second aspect of the present invention there is provided a method of installing a rope operated switch assembly comprising connecting the rope to at least one switch which is actuable to switch between first and second conditions on a change in tension of the rope, the tope being initially installed such that an approximation of the correct tension is achieved in the rope, and increasing the tension in the rope by means of a tensioner, wherein the tensioner comprises a body and a rotatable member which engages the rope, the tension in the rope being increased by rotating the rotatable member relative to the body such that the rope is wound around the member, and locking the rotatable ember in position relative to the body after the rope has been tensioned.

The tension of the rope is preferably monitored as the tension is increased by viewing a tension indicator provided on the at least one switch. The tensioner is preferably placed close to an end of the rope, adjacent to the at least one switch, for ease of viewing of the tension indicator provided on the switch.

Unlocking means are preferably provided in the tensioner so that the tension of the rope may be released.

One embodiment of a rope tensioner for use in the invention comprises a body defining a passage through which a rope can be inserted to project from each end of the passage, a member rotatable relative to the body and formed to engage a rope extending through the passage such that rotation of the member causes the rope to be wound around the member, and means for locking the member in position relative to the body to resist unwinding of the rope from the member.

The means for rotating the rotatable member around which the rope is wound may be a drive member mechanically coupled by a gear to the rotatble member. The drive member may be a worm gear meshed with a gear supported by the rotatable member. The locking means may be provided by providing a gear system with a mechanical advantage such that unwinding of the rope from the rotatable member is prevented unless the drive member is rotated to drive the rotatable member in a direction to unwind the rope.

The rotatable member may be a shaft defining an aperture aligned with openings in the tensioner body.

The locking means preferably comprises a ratchet and pawl assembly.

Preferably the tensioner comprises means for releasing the locking means.

An embodiment of the present invention will now be described by way of example with reference to the accompanying drawings, in which:
Figure 1 is a plan view of a rope operated switch assembly according to the present invention;
Figure 2 is an exploded perspective view of a tensioner for use in the rope operated switch assembly of figure 1;
Figure 3 is a perspective view of the base of the tensioner of figure 2;
Figure 4 is a perspective view of the base of the tensioner of figure 3, with a cover plate;
Figure 5 shows perspective views of the tensioner from different viewpoints;
Figure 6 is a perspective exploded view of a second embodiment of the present invention;
Figure 7 is a view from above of a base component of the embodiment of figure 6 showing a spindle engaged by a worm drive; and
Figures 8 and 9 show the embodiment of Figure 6 after removal of a cover and illustrating successive stages in the winding of a rope onto the spindle.

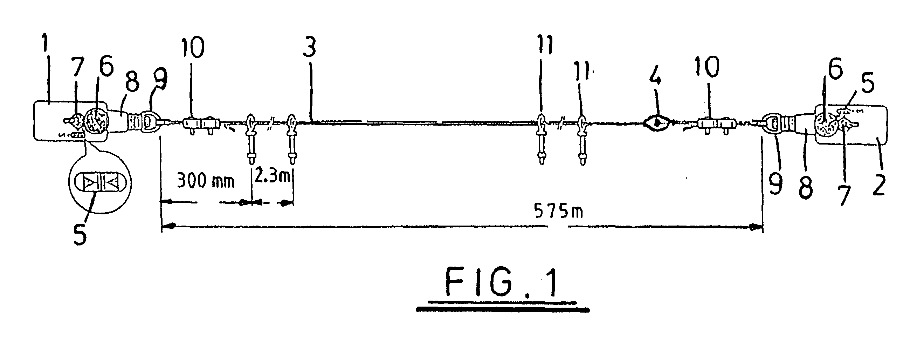

Referring to figure 1 of the accompanying drawings, there is illustrated a rope operated switch assembly comprising a first switch 1, a second switch 2, a rope 3 extending between the switches and a tensioner 4 installed along the rope.

The switches 1 and 2 are of any suitable design, and may be as described in WO-A-97/20334, for example. The switches are such that two tension thresholds are established. The first, lower threshold is such that unless the tension of the rope exceeds the first threshold the switch cuts off the supply of power required to enable the machinery to be operated. The second, higher threshold is such that unless the tension on the rope is less than the second threshold, the switch again acts to cut off the supply of power to the machinery. The switches 1, 2 each comprise a tension indicator 5, an emergency stop button 6, and a reset knob 7. Each switch also comprises a tubular body extension 8 which receives a spring-loaded shaft attached to a rotatable D-ring connector 9. The switches are mounted such that the distance between the D-rings 9 is generally less than 75 metres.

The rope 3 is PVC coated steel cable, although any suitable rope may be used. The rope is attached between the switches 1, 2 by passing the rope around suitable thimbles looped through the rings 9 and clamping the rope ends in clamps 10, in a known manner. The rope is supported along its length by means of a plurality of eye bolts 11 placed at distances of 2 to 3 metres apart along the machinery.

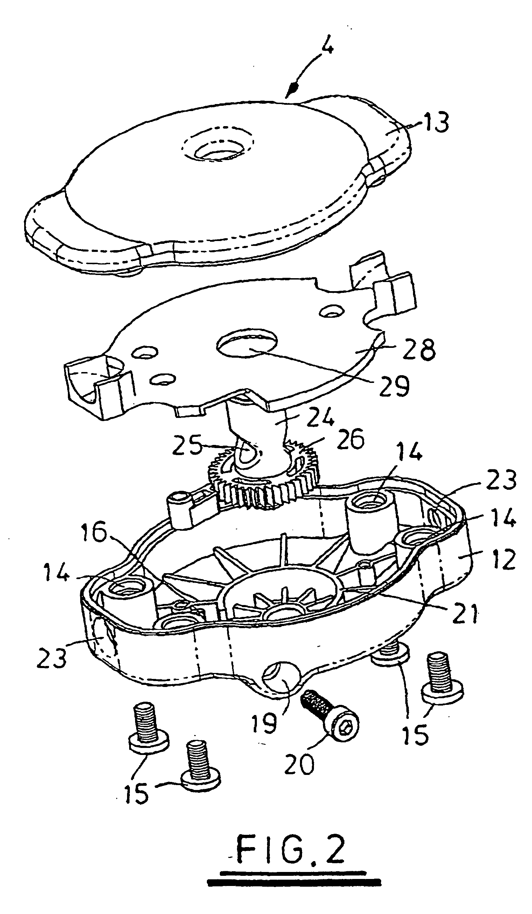

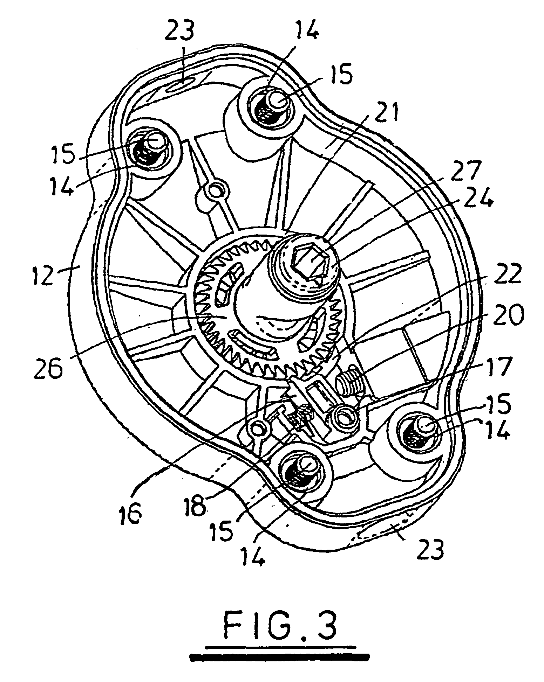

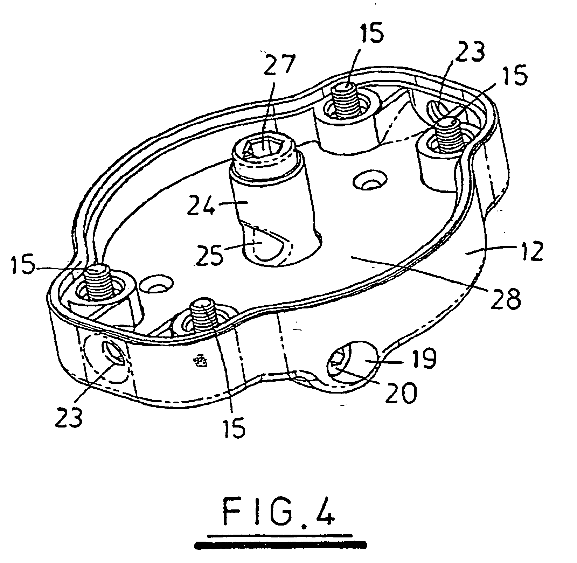

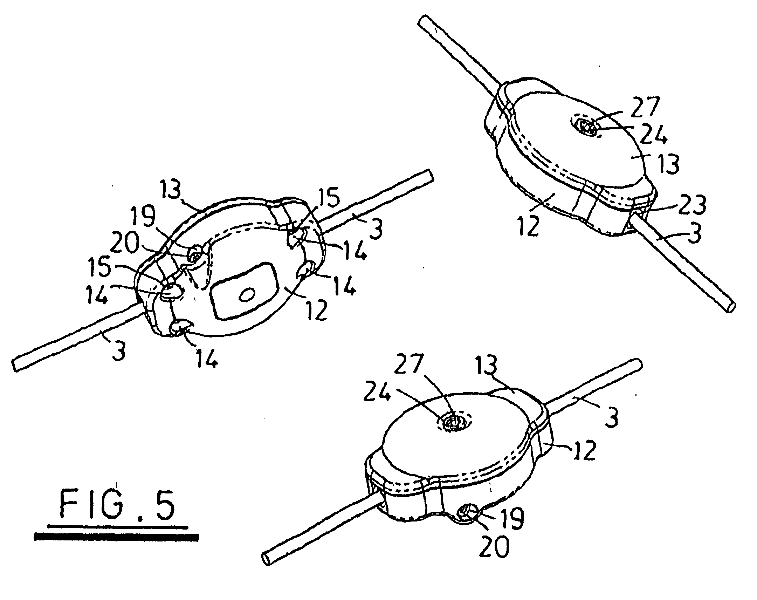

The tensioner 4 is further illustrated in figures 2 to 5. The tensioner comprises a base 12 and top 13. The base 12 comprises four apertures 14 to allow screws 15 to be screwed into corresponding threaded apertures (not shown) on the top 13 to hold the tensioner together. A pawl 16 is mounted on a spindle 17, and is acted on by a spring 18. A threaded aperture 19 allows a screw 20 to be screwed into engagement with the pawl 16, to push it against the biasing force of spring 18. A circular wall 21 is provided in the base to form a recess, the wall 21 having a section 22 of reduced height over which the pawl extends.

Two further apertures 23 are provided in base 12, one at either end thereof, to enable the tensioner to be threaded onto the rope 3.

A rotatable spindle 24 is provided in the tensioner, having an aperture 25 therethrough, and having a ratchet-toothed wheel 26 provided at one end thereof. The aperture 25 may be aligned with apertures 23 as shown so that the rope may be pushed through one aperture 23, the aperture 25, and the other aperture 23. A hexagonal recess 27 is provided in one end of the spindle 24 which extends through the top 13, suitable to allow the spindle to be turned using an Allen key. The end of the spindle having the recess 27 is further provided with an arrow-shaped indicator to indicate when the aperture 25 is aligned with the apertures 23. The ratchet-toothed wheel 26 sits in the circular recess created by wall 21 in the base 12.

A cover plate 28 is provided between the base 12 and top 13, having an aperture 29 in the centre thereof such that the spindle 24 may pass through the aperture leaving the toothed wheel 26 between the cover plate and the base 12 so that the aperture 25 is positioned between the cover plate and the top 13.

To install the rope operated switch assembly, the tensioner 4 is threaded onto the rope 3, and the rope is installed between switches 1 and 2. The rope 3 is pulled to an approximation of the correct tension during installation. The cover plate 28 allows the rope to be easily threaded through the tensioner 4 without becoming entangled in the toothed wheel 26 and pawl 20.

The tension in the rope 3 is then increased by turning the spindle 24 using an Allen key. This causes the rope extending through the spindle 24 to be wound about the spindle from both sides, thereby increasing the tension on the rope. The tension is maintained on the rope due to the ratchet and pawl preventing the spindle from turning in the wrong direction. The tension of the rope 3 is monitored by means of the tension indicators 5 provided on switches 1, 2. The tensioner 4 may be installed on the rope near to one of the switches so that it is easy for the operator to monitor the tension of the rope.

The tension may be released if necessary by tightening the screw 20, which pushes on the pawl 16 to release it from the ratchet-toothed wheel 26. The rope can then be pulled to release some of it from the tensioner, and the screw 20 can be unscrewed to re-set the ratchet and pawl. The tension in the rope may then be increased again by turning spindle 24.

If the tension in the rope alters over time, for example owing to temperature variations, friction and wearing of the rope caused by mis-aligned eye-bolts, etc, the tension may be simply re-set by either turning the spindle to tighten the rope, or by releasing the pawl to unlock the tensioner.

To operate the machinery, the tension of the rope is adjusted so that switches 1 and 2 are in the "run" position between the two tension thresholds. If the tension on the rope is then increased (i.e. by an operator pulling the rope), or decreased (i.e. if the rope is cut), the switches 1 and 2 are tripped, and the power to the machine is cut preventing it from operating.

The tensioner may be attached to only one end of the rope and connected to a switch by, for example, a hook passed through the ring 9. In this instance, the end of the rope that is connected to the tensioner would have to be securely attached to the spindle.

Although in the illustrated embodiment the tensioner is attached to the rope before the rope is connected to the or each switch, the tensioner could be attached to the rope after it has been installed, to allow for retro-fitting of existing rope operated switch assemblies. For example, the tensioner could comprise hooked attachment means that may be used to connect the tensioner to the rope, the rope becoming engaged in a separately rotatable member in the tensioner body.

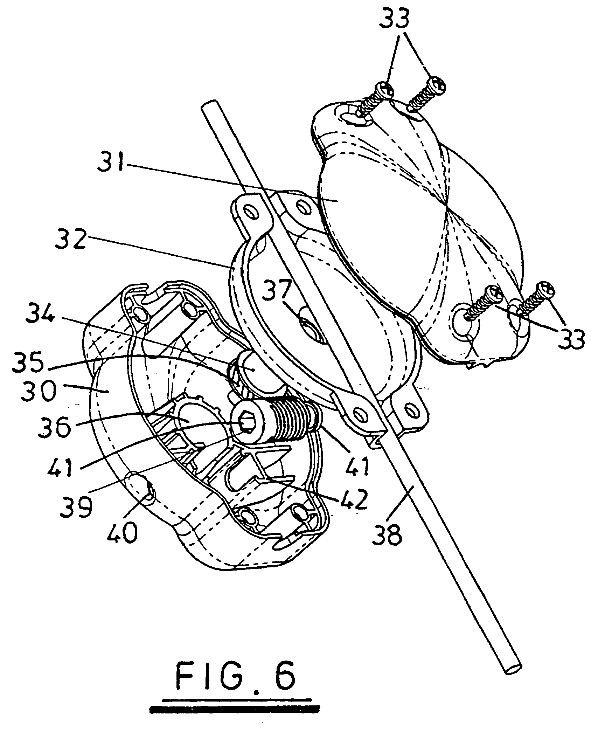

Referring now to Figure 6, this illustrates an alternative embodiment of tensioner for use in the invention. Whereas in the case of the embodiment of tensioner illustrated in Figures 1 to 5 the spindle 24 is rotated by inserting a suitable tool into a recess provided in one end of the spindle, in the embodiment of Figure 6 the rope is tensioned by rotating a spindle using a worm drive gear arrangement.

Referring in detail to Figure 6, the illustrated embodiment of the invention comprises a base 30, a top 31, and an intermediate plate 32 which is sandwiched between the base and top, the three components being secured together by screws 33. A spindle 34 supports gear teeth 35, the spindle being received within a socket 36 moulded into the base 30 and extending through an opening 37 in the plate 32. Although it is not visible in Figure 6, the spindle 34 defines a hole through which a rope to be tensioned 38 is inserted.

A worm drive 39 aligned with an aperture 40 in the base has a flanged end 41 which is received in a socket 42 defined by the base. The worm 39 is retained between the base 30 and plate 32 and engages the gear 35. A tool may be inserted through the opening 40 to engage in a socket 41 defined in the end of the worm 39 to enable the rotation of the worm about its axis, such rotation causing the spindle 34 to rotate about its axis as a result of the interengagement of the worm 39 and the gear 35. Thus the rope 38 can be caused to wind around the spindle 34.

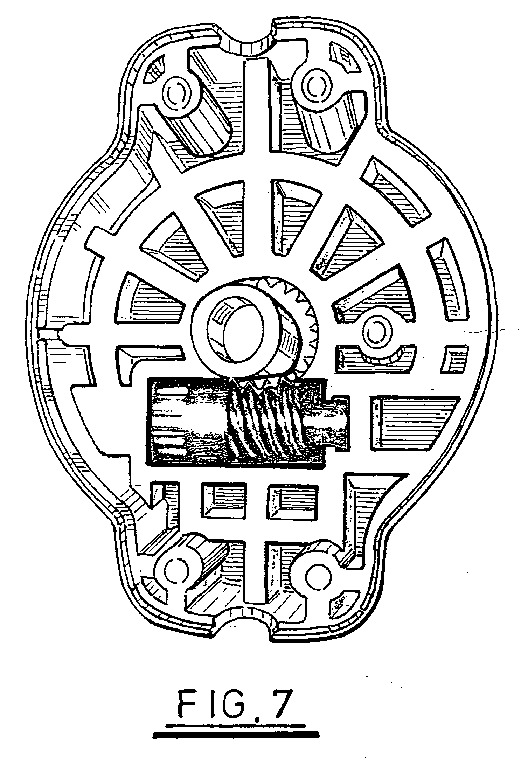

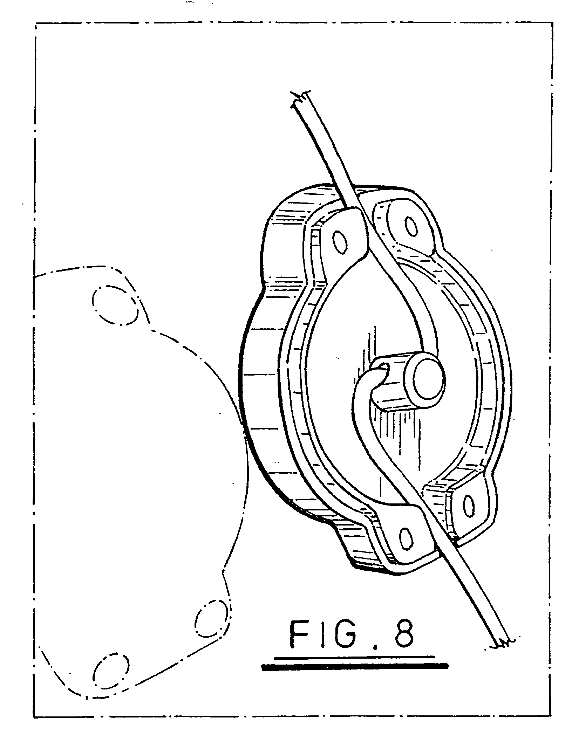

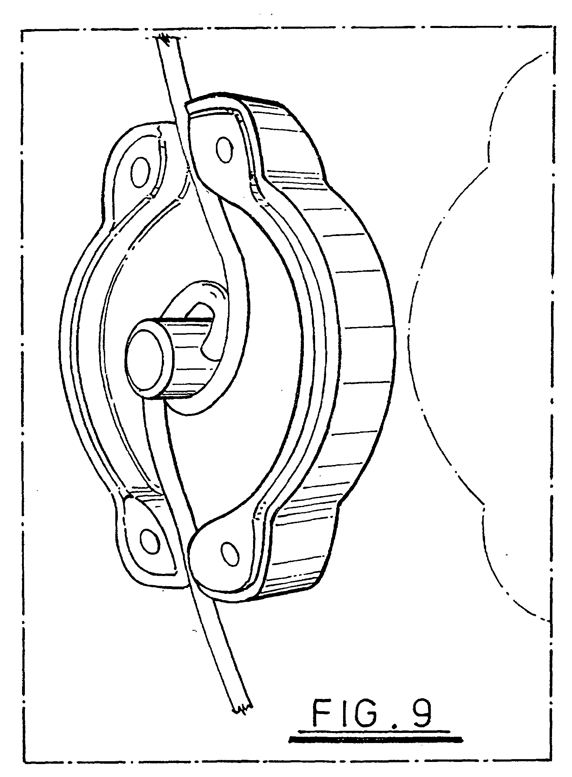

Figure 7 shows the base 30, spindle 34 and worm drive 39 before the plate 32 is mounted on the base. Figures 8 and 9 show the embodiment of Figure 6 after removal of the top cover 31 and insertion of a rope. Figure 8 shows the rope wound around the spindle 34 after the spindle has been turned through slightly more than 90°, and Figure 9 shows the rope after further rotation of the spindle. It will be appreciated that the manner in which the rope is wound around the spindle as shown in Figures 8 and 9 is the same as the manner in which a rope is wound around the spindle 24 in the embodiment of Figures 1 to 5.

In contrast to the embodiment of Figures 1 to 5, in the case of the embodiment of Figure 6 tension in the rope can be closely controlled as a rotation through 360° of the worm 39 causes a relatively smaller rotation of the spindle 34. Furthermore, the mechanical advantage provided by the gearing system can be such that it is unnecessary positively to lock the worm 39 in a position to which it has been rotated. This means that the installer can increase or decrease the rope tension by simple rotation of a tool inserted into the socket 41, enabling very fine adjustment to the rope tension. Additional locking means (not shown) may however be provided to positively lock the worm and spindle 5 in the positions to which they have been rotated.

## Claims

1. A rope operated switch assembly comprising a rope (3) extending to at least one switch (1), the switch being actuable to switch between first and second conditions on a change in tension of the rope, and a tensioner (4) for setting the tension of the rope, **characterised in that** the tensioner (4) comprises a body (12,13;30,31), a rotatable member (24;34) which engages the rope, means for rotating the member (24,34) relative to the body to adjust tension in the rope by winding the rope around the member, and locking means (16,26;35,39) to lock the member in position relative to the body.

2. A rope operated switch assembly according to claim 1, wherein the locking means comprises a ratchet (26) and pawl (16).

3. A rope operated switch assembly according to claim 2, comprising means (20) displaceable relative to the body to move the pawl (16) out of engagement with the ratchet (26), thereby unlocking the rotatable member (24) to release the tension in the rope.

4. A rope operated switch assembly according to claim 3, wherein the displaceable means (20) comprises a screw (20) that may be screwed into the body (12).

5. A rope operated switch assembly according to claim 1, wherein the rope extends through the body and through an aperture (25) in the rotatable member (24).

6. A rope operated switch assembly according to any preceding claim, wherein a plate (28;32) is provided to separate the tensioner into two compartments, the rope extending into one compartment, and the locking means (16,26;35,39) being provided in the other compartment.

7. A rope operated switch assembly according to any preceding claim, wherein the tensioner (4) is provided adjacent the switch (1).

8. A rope operated switch assembly according to claims 1 or 5 or any one of claims 6 or 7 when appendent on claim 1 wherein the locking means is provided by a gear system (35,39) comprising a drive member (39) coupled to the rotatable member by a gear (35) and where the gear system (35,39) has a mechanical advantage which prevents unwinding of the rope from the rotatable member other than by rotation of the drive member (39) in a direction to unwind the rope.

9. A method of installing a rope operated switch assembly comprising connecting the rope (3) to at least one switch (1) which is actuable to switch between first and second conditions on a change in tension of the rope, and **characterised by** the rope being initially installed such that an approximation of the correct tension is achieved in the rope, and increasing the tension in the rope by means of a tensioner (4), wherein the tensioner comprises a body (12,13;30,31) and a rotatable member (24;34) which engages the rope, the tension in the rope being increased by rotating the rotatable member (24;34) relative to the body such that the rope is wound around the rotatable member, and locking the rotatable member in position relative to the body after the rope has been tensioned.

10. A method according to claim 9, wherein the tension of the rope is monitored as the tension is increased by viewing a tension indicator (5) provided on the at least one switch (1).

11. A method according to claim 10, wherein the tensioner (4) is placed close to an end of the rope adjacent to the at least one switch.

12. A method according to any one of claims 9 to 11, wherein unlocking means (20;35,39) are provided in the tensioner so that the tension of the rope may be released.

13. A method of installing a rope operated switch assembly according to any one of claims 9 to 11 in which tensioning of the rope is by rotation of a drive member (39) coupled to the rotatable member by a gear (35) of a gear system, and in which the gear system (35,39) has a mechanical advantage which prevents unwinding of the rope other than by rotation of the drive member (39) in a direction to unwind the rope.

## Patentansprüche

1. Eine seilbetätigte Schalterbaugruppe, die ein Seil (3) umfasst, welches sich zu wenigstens einem Schalter (1) erstreckt, wobei der Schalter betätigbar ist, um zwischen ersten und zweiten Zuständen bei einer Veränderung in der Spannung des Seils zu schalten, und einen Spanner (4) zur Einstellung der Spannung des Seils, **dadurch gekennzeichnet, dass** der Spanner (4) aufweist einen Körper (12, 13; 30, 31), ein drehbares Bauteil (24, 34), welches das Seil erfasst, Mittel zum Drehen des Bauteils (24, 34) relativ zum Körper, um die Spannung im Seil durch Aufwickeln des Seils um das Bauteil herum einzustellen, und Verriegelungsmittel (16, 26; 35, 39), um das Bauteil in der Lage relativ zum Körper zu verriegeln.

2. Seilbetätigte Schalterbaugruppe nach Anspruch 1, bei der die Verriegelungsmittel eine Ratsche (26) und eine Klinke (16) umfassen.

3. Seilbetätigte Schalterbaugruppe nach Anspruch 2, welche Mittel (20) umfasst, die relativ zum Körper verschiebbar sind, um die Klinke (16) aus dem Eingriff mit der Ratsche (26) heraus zu bewegen, wobei das drehbare Bauteil (24) entriegelt wird, um die Spannung des Seils freizugeben.

4. Seilbetätigte Schalterbaugruppe nach Anspruch 3, bei der die verschiebbaren Mittel (20) eine Schraube (20) umfassen, welche in den Körper (12) geschraubt werden kann.

5. Seilbetätigte Schalterbaugruppe nach Anspruch 1, bei der das Seil sich durch den Körper und durch eine Öffnung (25) im drehbaren Bauteil (24) erstreckt.

6. Seilbetätigte Schalterbaugruppe nach irgendeinem der vorhergehenden Ansprüche, bei der eine Platte (28, 32) bereitgestellt ist, um den Spanner in zwei Abteile zu unterteilen, wobei sich das Seil in ein Abteil hinein erstreckt und die Verriegelungsmittel (16, 26; 35, 39) im anderen Abteil bereitgestellt werden.

7. Seilbetätigte Schalterbaugruppe nach irgendeinem der vorhergehenden Ansprüche, bei der der Spanner (4) benachbart dem Schalter (1) bereitgestellt ist.

8. Seilbetätigte Schalterbaugruppe nach irgendeinem der Ansprüche 1 oder 5 oder irgendeinem der Ansprüche 6 oder 7, wenn abhängig von Anspruch 1, bei der die Verriegelungsmittel durch ein Zahnradsystem (35, 39) bereitgestellt werden, welche ein Antriebsbauteil (39) beinhalten, welches mit dem drehbaren Bauteil durch ein Zahnrad (35) gekoppelt ist, und wo das Zahnradsystem (35, 39) einen mechanischen Vorteil hat, welcher das Abwickeln des Seils vom drehbaren Bauteil verhindert, außer durch die Verdrehung des Antriebsbauteils (39) in einer Richtung um das Seil abzurollen.

9. Verfahren zum Einrichten einer seilbetätigten Schalterbaugruppe, umfassend das Verbinden des Seils (3) mit wenigstens einem Schalter (1 ), welcher betätigbar ist, um zwischen ersten und zweiten Zuständen bei einer Veränderung in der Spannung des Seils zu schalten, und **dadurch gekennzeichnet, dass** das Seil ausgänglich so eingerichtet ist, dass eine Annäherung der korrekten Spannung im Seil erreicht wird und die Spannung im Seil mittels eines Spanners (4) erhöht wird, wobei der Spanner einen Körper (12, 13; 30, 31) und ein drehbares Bauteil (24, 34) umfasst, welches das Seil erfasst, wobei die Spannung des Seils durch Drehen des drehbaren Bauteils (24, 34) relativ zum Körper erhöht wird, so dass Seil um den Körper des drehbaren Bauteils herumgewickelt wird, und Verriegelung des verdrehbaren Bauteils in der Lage relativ zum Körper, nachdem das Seil gespannt wurde.

10. Verfahren nach Anspruch 9, bei dem die Spannung des Seils beobachtet wird, während die Spannung erhöht wird, indem ein Spannungsanzeiger (5) beobachtet wird, welcher auf dem wenigstens einen Schalter (1) bereitgestellt ist.

11. Verfahren nach Anspruch 10, bei dem der Spanner (4) in der Nähe eines Endes des Seils benachbart zu dem wenigstens einen Schalter platziert ist.

12. Verfahren nach irgendeinem der Ansprüche 9 bis 11, bei dem Entriegelungsmittel (20, 35, 39) im Spanner bereitgestellt sind, so dass die Spannung des Seils freigegeben werden kann.

13. Verfahren zur Einrichtung einer seilbetätigten Schalterbaugruppe nach irgendeinem der Ansprüche 9 bis 11, in welchem die Spannung des Seils durch die Drehung eines Antriebsbauteils (39) erfolgt, das mit dem drehbaren Bauteil über ein Zahnrad (35) eines Zahnradsystems gekoppelt ist, und in welchem das Zahnradsystem (35, 39) den mechanischen Vorteil aufweist, welcher verhindert, dass sich das Seil abwickelt, außer durch Drehung des Antriebsbauteils (39) in einer Richtung zur Abwicklung des Seils.

## Revendications

1. Un ensemble interrupteur à commande par câble ou corde (3) s'étendant jusqu'à au moins un interrupteur (1), l'interrupteur étant susceptible d'être activé pour commuter entre une première et une deuxième conditions suite à une variation de tension du câble, et un organe de mise sous tension (4) pour établir la tension dans le câble, **caractérisé en ce que** l'organe de mise sous tension (4) comprend un corps (12, 13 ; 30, 31), un organe rotatif (24 ; 34) qui vient en prise avec le câble, des moyens pour faire tourner l'organe (24 ; 34) par rapport au corps pour régler la tension du câble en enroulant le câble autour de l'organe, et des moyens de verrouillage (16, 26 ; 35, 39) pour verrouiller l'organe en position par rapport au corps.

2. Un ensemble interrupteur à commande par câble selon la revendication 1, dans lequel les moyens de verrouillage comprennent un rochet (26) et un cliquet d'arrêt (16).

3. Un ensemble interrupteur à commande par câble selon la revendication 2, comprenant des moyens (20) susceptibles de se déplacer par rapport au corps pour déplacer le cliquet d'arrêt (16) hors de sa prise avec le rochet (26), en déverrouillant ainsi l'organe rotatif (24) afin de relâcher la tension du câble.

4. Un ensemble interrupteur à commande par câble selon la revendication 3, dans lequel les moyens susceptibles de se déplacer (20) comprennent une vis (20) susceptible d'être vissée à l'intérieur du corps (12).

5. Un ensemble interrupteur à commande par câble selon la revendication 1, dans lequel le câble s'étend à travers le corps et à travers une ouverture (25) dans l'organe rotatif (24).

6. Un ensemble interrupteur à commande par câble selon l'une quelconque des revendications précédentes dans lequel il est prévu une plaque (28 ; 32) pour séparer l'organe de mise sous tension en deux compartiments, le câble s'étendant à l'intérieur de l'un des compartiments, et les moyens de verrouillage (16,26 ; 35, 39) étant prévus dans l'autre compartiment.

7. Un ensemble interrupteur à commande par câble selon l'une quelconque des revendications précédentes dans lequel l'organe de mise sous tension (4) est prévu adjacent à l'interrupteur (1).

8. Un ensemble interrupteur à commande par câble selon la revendication 1 ou 5 ou l'une quelconque des revendications 6 ou 7 lorsqu'elles dépendent de la revendication 1, dans lequel les moyens de verrouillage sont assurés par un système d'engrenage (35, 39) comprenant un organe d'entraînement (39) couplé à l'organe rotatif par un engrenage (35) et dans lequel le système d'engrenage (35, 39) présente un effet mécanique empêchant le déroulement du câble de l'organe rotatif outre que suite à la rotation de l'organe d'entraînement (39) dans une direction correspondant au déroulement du câble.

9. Un procédé d'installation d'un ensemble interrupteur à commande par câble comprenant les étapes consistant à relier le câble (3) à au moins un interrupteur (1) susceptible d'être activé pour commuter entre une première et une deuxième conditions suite à une variation de tension du câble, et **caractérisé par** l'installation initiale du câble de façon à obtenir une approximation de la bonne tension dans le câble suivie d'une augmentation de la tension du câble au moyen d'un organe de mise sous tension (4), dans lequel l'organe de mise sous tension comprend un corps (12, 13 ; 30, 31) ainsi qu'un organe rotatif (24 ; 34) qui vient en prise avec le câble, la tension du câble étant augmentée suite à la rotation de l'organe rotatif (24 ; 34) par rapport au corps de façon à enrouler le câble autour de l'organe rotatif, suivi du verrouillage de l'organe rotatif dans une position par rapport au corps après avoir mise sous tension le câble.

10. Un procédé selon la revendication 9, dans lequel la tension du câble est surveillée lors de l'augmentation de la tension du câble en visionnant un indicateur de tension (5) prévu sur au moins un commutateur (1).

11. Un procédé selon la revendication 10, dans lequel l'organe de mise sous tension (4) est placé à proximité d'une extrémité du câble adjacent audit au moins un commutateur.

12. Un procédé selon l'une quelconque des revendications 9 à 11, dans lequel les moyens de déverrouillage (20 ; 35, 39) sont prévus dans l'organe de mise sous tension afin de pouvoir relâcher la tension du câble.

13. Un procédé d'installation d'un ensemble interrupteur à commande par câble selon l'une quelconque des revendications 9 à 11 dans lequel la mise sous tension du câble est obtenue par la rotation d'un organe d'entraînement (39) couplé à l'organe rotatif par un engrenage (35) d'un système d'engrenage, dans lequel le système d'engrenage (35, 39) présente un effet mécanique empêchant un déroulement du câble autre que suite à la rotation de l'organe d'entraînement (39) dans une direction correspondant au déroulement du câble.
